# EUROPEAN PATENT APPLICATION

(11) **EP 4 807 696 A1**
(43) Date of publication of application: **16.09.2026**
(21) Application number: 24895751.6
(22) Date of filing: 13.08.2024
(51) Int. Cl.: G06V 20/58

(54) **METHOD AND APPARATUS FOR DETERMINING PARKING AREA, AND VEHICLE**

(30) Priority: 28.11.2023 CN 202311613189
(71) Applicant: Yinwang Intelligent Technologies Co., Ltd., Shenzhen, Guangdong 518110 (CN)
(72) Inventor: FENG, Han, Shenzhen, Guangdong 518110 (CN); TIAN, Yong, Shenzhen, Guangdong 518110 (CN); WANG, Jing, Shenzhen, Guangdong 518110 (CN); YU, Jiapeng, Shenzhen, Guangdong 518110 (CN); YANG, Jinghuan, Shenzhen, Guangdong 518110 (CN)
(74) Representative: Gill Jennings & Every LLP
(86) International application number: PCT/CN2024/111661
(87) International publication number: WO 2025/112648

(57) **Abstract**

A method and an apparatus for determining a parking area, and a vehicle are provided. The method includes: obtaining a first group of images, where the first group of images includes at least one image of a first parking space and at least one image of a first area in which the first parking space is located in a first building; and deleting the at least one image of the first parking space when the first parking space is not a target parking space of a vehicle. This solution can be applied to the field of intelligent vehicles such as electric vehicles and new energy vehicles. When the first parking space is not the target parking space, an image including the first parking space is deleted, thereby helping reduce memory overheads required by the vehicle to determine the parking area. In addition, the image of the first area is not deleted, so that the vehicle selects an image with highest confidence from a plurality of images of the first area, then determines the first area based on the image with the highest confidence, and sends the image with the highest confidence or information about the determined first area to an electronic device associated with the vehicle. This helps a user search for the vehicle, and can increase a vehicle search success rate.

## Description

This application claims priority to Chinese Patent Application No. 202311613189.7, filed with the China National Intellectual Property Administration on November 28, 2023 and entitled "METHOD AND APPARATUS FOR DETERMINING PARKING AREA, AND VEHICLE", which is incorporated herein by reference in its entirety.

### TECHNICAL FIELD

This application relates to the field of intelligent vehicles, and more specifically, to a method and an apparatus for determining a parking area, and a vehicle.

### BACKGROUND

When parking in unfamiliar areas, people are likely to forget parking locations. Therefore, people have an increasingly strong demand for finding vehicles in large underground parking lots. In a current parking scenario, people generally record a parking space number of a parking area of a vehicle, or record an image of a surround of the parking area of the vehicle, and then in a vehicle search process, determine a location of the vehicle based on the parking space number and/or the image of the surround of the parking area of the vehicle. However, only the parking space number and/or the image of the surround of the vehicle are/is not enough to support a user in quickly determining the specific location of the vehicle.

In view of this, a solution for determining a parking area that can improve vehicle search efficiency is urgently required.

### SUMMARY

This application provides a method and an apparatus for determining a parking area, and a vehicle, to provide accurate information of the parking area for a user, thereby helping improve vehicle search efficiency of the user.

According to a first aspect, a method for determining a parking area is provided. The method may be performed by a vehicle, or may be performed by a computing platform of the vehicle, or may be performed by a chip or a circuit in the computing platform. The method includes: obtaining an image associated with a first parking space, and determining first parking information based on the image associated with the first parking space, where the first parking information includes first area information and/or second parking space information, the first parking space is a target parking space of the vehicle within first duration, the first area information indicates a location of a first building including the first parking space, and the first parking space information indicates a location of the first parking space in the first building; and when it is detected that the vehicle performs a first gear shift, and a moving distance of the vehicle between the first gear shift and a second gear shift is greater than or equal to a first distance threshold, deleting the image associated with the first parking space, where a moment at which the second gear shift is performed is earlier than a moment at which the first gear shift is performed; or when it is detected that the vehicle performs a third gear shift, and a moving distance of the vehicle between the third gear shift and the second gear shift is less than or equal to a second distance threshold, sending the first parking information to an electronic device, where the moment at which the second gear shift is performed is earlier than a moment at which the third gear shift is performed, and the electronic device is associated with the vehicle.

In some implementations, the first gear shift may include a shift from a reverse gear to a drive gear or a shift from the drive gear to the reverse gear. The third gear shift may include a shift from the reverse gear to a parking gear. The second gear shift may include a shift from the reverse gear to the drive gear or a shift from the drive gear to the reverse gear.

For example, the first distance threshold may be 3 meters, 5 meters, or another value. The second distance threshold may be 2 meters, 1.5 meters, or another value.

It may be understood that, when the vehicle performs the first gear shift, and the moving distance of the vehicle between the first gear shift and the second gear shift is greater than or equal to the first distance threshold, it may be considered that, in a process of attempting to park the vehicle in the first parking space, the vehicle terminates current parking, that is, the vehicle no longer uses the first parking space as the target parking space. When the vehicle performs the third gear shift, and the moving distance of the vehicle between the third gear shift and the second gear shift is less than or equal to the second distance threshold, it may be considered that the vehicle is parked in the first parking space.

In a parking process of the vehicle, because parking difficulties of parking spaces are different, a plurality of parking spaces may be sequentially selected as target parking spaces. In the foregoing technical solution, for the foregoing case, only parking information of a final parking space of the vehicle may be sent to the electronic device, and a locally stored image associated with another parking space can be cleared. This can reduce storage overheads of the vehicle when increasing a vehicle search success rate.

With reference to the first aspect, in some implementations of the first aspect, the method further includes: obtaining an image associated with a second parking space, and determining second parking information based on the image associated with the second parking space, where the second parking information includes second area information and/or second parking space information, the second parking space is a target parking space of the vehicle within second duration, a start moment of the second duration is equal to or later than an end moment of the first duration, the second area information indicates the location of the first building, and the second parking space information indicates a location of the second parking space in the first building.

With reference to the first aspect, in some implementations of the first aspect, the method further includes: sending the second parking information to the electronic device.

With reference to the first aspect, in some implementations of the first aspect, before obtaining the image associated with the first parking space, the method further includes: when a speed of the vehicle is less than or equal to a speed threshold, and signal strength of a first sensor is less than or equal to a first strength threshold, controlling an image shooting apparatus of the vehicle to capture a video stream, where the video stream includes the image associated with the first parking space, and the first sensor is a satellite navigation sensor.

With reference to the first aspect, in some implementations of the first aspect, the method further includes: determining a frame extraction frequency based on the speed of the vehicle and/or a traveling distance of the vehicle. Obtaining the image associated with the first parking space includes: obtaining, from the video stream based on the frame extraction frequency, the image associated with the first parking space.

According to a second aspect, a method for determining a parking area is provided. The method may be performed by a vehicle, or may be performed by a computing platform of the vehicle, or may be performed by a chip or a circuit in the computing platform. The method includes: obtaining first positioning information and information about a second sensor of the vehicle within third duration, where the first positioning information is determined based on a first positioning signal, the first positioning signal is a signal obtained when signal strength of a third sensor is less than or equal to a second strength threshold, a start moment of the third duration is a moment at which the first positioning signal is obtained, an end moment of the third duration is a moment at which the vehicle stops in a third parking space, the second sensor is a non-satellite positioning sensor, and the third sensor is a satellite positioning sensor; and determining first location information of the third parking space based on the first positioning information and the information about the second sensor, where the first location information indicates longitude and latitude and/or a height of the third parking space.

In the foregoing technical solution, longitude and latitude and/or a height of each location in a parking lot can be determined based on a non-satellite positioning sensor, thereby helping a cloud server construct map information of the parking lot.

With reference to the second aspect, in some implementations of the second aspect, the method further includes: obtaining an image associated with the third parking space, and determining area information and/or parking space information of the third parking space based on the image associated with the third parking space, where the area information indicates a location of a second building including the third parking space, and the parking space information indicates a location of the third parking space in the second building; and sending information about the third parking space to the cloud server, where the information about the third parking space includes the longitude and the latitude and/or the height of the third parking space, and the area information and/or the parking space information of the third parking space.

In the foregoing technical solution, when the vehicle has no image shooting apparatus or use of an image shooting apparatus is limited, the area information and/or the parking space information can be obtained through early-stage data collection and data tagging with reference to the longitude and the latitude, thereby improving user experience.

With reference to the second aspect, in some implementations of the second aspect, the method further includes: sending the first location information to the cloud server, where the first location information is used to determine a location of a building including the third parking space and/or a location of the third parking space in the building.

According to a third aspect, an apparatus for determining a parking area is provided. The apparatus includes an obtaining unit and a processing unit, configured to perform the method according to any one of the first aspect and the possible manners of the first aspect, or configured to perform the method according to any one of the second aspect and the possible manners of the second aspect.

According to a fourth aspect, an apparatus for determining a parking area is provided. The apparatus includes a processor. The processor is configured to execute a computer program or instructions, to enable the apparatus to perform the method according to any one of the first aspect and the possible manners of the first aspect, or to enable the apparatus to perform the method according to any one of the second aspect and the possible manners of the second aspect.

According to a fifth aspect, a computing platform is provided. The computing platform includes the apparatus according to any one of the third aspect and the possible manners of the third aspect, or the computing platform includes the apparatus according to any one of the fourth aspect and the possible manners of the fourth aspect.

According to a sixth aspect, a vehicle is provided. The vehicle includes the apparatus according to any one of the third aspect and the possible manners of the third aspect; or the vehicle includes the apparatus according to any one of the fourth aspect and the possible manners of the fourth aspect; or the vehicle includes the computing platform according to any one of the fifth aspect and the possible manners of the fifth aspect.

According to a seventh aspect, a computer-readable storage medium is provided. The computer-readable storage medium stores a computer program or instructions. When the computer program or the instructions are run on a computer, the method according to any one of the first aspect and the possible manners of the first aspect is performed, or the method according to any one of the second aspect and the possible manners of the second aspect is performed.

According to an eighth aspect, a computer program product is provided, including instructions. When the instructions are run on a computer, the method according to any one of the first aspect and the possible manners of the first aspect is performed, or the method according to any one of the second aspect and the possible manners of the second aspect is performed.

According to a ninth aspect, a chip is provided. The chip includes a circuit. The circuit is configured to perform the method according to any one of the first aspect and the possible manners of the first aspect, or is configured to perform the method according to any one of the second aspect and the possible manners of the second aspect.

According to the method for determining a parking area provided in embodiments of this application, a user can find a location of a parking lot and a location of a parking space in the parking lot more conveniently and quickly. When a vehicle has no image shooting apparatus or use of an image shooting apparatus is limited, area information and/or the parking space information can be obtained through early-stage data collection and data tagging with reference to longitude and latitude, thereby improving user experience.

According to a tenth aspect, a method for determining a parking area is provided. The method may be performed by a vehicle, or may be performed by a computing platform of the vehicle, or may be performed by a chip or a circuit in the computing platform.

The method includes: obtaining a first group of images, where the first group of images includes at least one image of a first parking space and at least one image of a first area in which the first parking space is located in a first building; and deleting the at least one image of the first parking space when the first parking space is not a target parking space of a vehicle.

In some implementations, a distance between the first parking space and the vehicle is less than or equal to a first distance threshold. An area in which the vehicle is located in the first building in this embodiment is a space, for example, a floor or an area on the floor, in the first building.

In some implementations, when the first parking space is not the target parking space of the vehicle, and the vehicle travels away from the first area in which the first parking space is located, the at least one image of the first area is deleted.

In some implementations, the first group of images is stored in a storage apparatus of the vehicle. Deleting the at least one image of the first parking space or the at least one image of the first area includes: deleting the at least one image of the first parking space or the at least one image of the first area stored in the storage apparatus of the vehicle.

In the foregoing technical solution, when the first parking space is not the target parking space, deleting an image including the first parking space helps reduce memory overheads required by the vehicle to determine the parking area. In addition, when the image including the first parking space is deleted, the image of the first area is not deleted, so that the vehicle selects an image with highest confidence (for example, confidence of a recognition result of an area number or a floor number included in the image) from a plurality of images of the first area, then determines the first area based on the image with the highest confidence, and sends the image with the highest confidence or information about the determined first area to an electronic device associated with the vehicle. This helps a user search for the vehicle, and can increase a vehicle search success rate.

With reference to the tenth aspect, in some implementations of the tenth aspect, the method further includes: when the first parking space is the target parking space of the vehicle, determining first parking information based on the first group of images, where the first parking information indicates a location of the first parking space in the first building; and sending the first parking information to the electronic device, where the electronic device is associated with the vehicle.

The location of the first parking space in the first building includes a parking space number of the first parking space, or an area number or a floor number of the first area and the parking space number of the first parking space. In some implementations, the first parking information further indicates a location of the first building, for example, information about a street on which the first building is located.

In some implementations, the first parking information further includes the image of the first parking space and/or the image of the first area.

In some implementations, that the electronic device is associated with the vehicle may include: Accounts logged in to the electronic device and the vehicle are the same; or although the accounts logged in to the electronic device and the vehicle are different, both are accounts of an authorized user of the vehicle; or the electronic device is authorized by the authorized user of the vehicle, and accordingly, an association relationship is established between the vehicle and the electronic device. That the electronic device is associated with the vehicle may further include: Information can be transmitted between the electronic device and the vehicle through a mobile communication technology like a global system for mobile communications (global system of mobile communication, GSM), a general packet radio service (general packet radio service, GPRS), or long term evolution (long term evolution, LTE), for example, the information is transmitted between the electronic device and the vehicle through a cloud server; or the information can be transmitted between the electronic device and the vehicle through a wireless short-range communication technology like a Bluetooth (Bluetooth, BT) communication technology or a radio frequency identification (radio frequency identification, RFID) communication technology.

In the foregoing technical solution, when it is determined that the first parking space is the target parking space, parking information indicating the location of the first parking space in the first building is sent to the electronic device, thereby helping the user search for the vehicle.

In some implementations, sending the first parking information to the electronic device may include: directly sending the first parking information to the electronic device through a short-range communication technology. In this way, when a mobile communication signal in the first building is poor, and the information cannot be transmitted between the vehicle and the electronic device through the cloud server, the electronic device can still receive information about a parking location of the vehicle, thereby helping improve vehicle search efficiency and increase a vehicle search success rate.

With reference to the tenth aspect, in some implementations of the tenth aspect, the first parking information includes a first image of the first parking space, or the first parking information is determined based on the first image. The first image includes the parking space number of the first parking space. The method further includes: when the first parking space is the target parking space of the vehicle, deleting an image other than the first image from the at least one image of the first parking space.

In some implementations, the first image in the at least one image of the first parking space may be an image including the parking space number of the first parking space with highest confidence. It may be understood that, because an image captured by an image shooting apparatus (for example, a fisheye camera lens) of the vehicle has great distortion due to an image shooting angle, a field of view, or the like, a parking space number included in the image is not clear or is deformed, and consequently, when an element like a word, a letter, or a digit in the image is recognized through an algorithm like continuous optical character recognition (optical character recognition, OCR), the parking space number included in the image cannot be accurately identified, or confidence of an identified parking space number may be low. Sending the image with the parking space number with the highest confidence to the electronic device can reduce a probability that the user finds a wrong parking space, thereby increasing the vehicle search success rate.

In the foregoing technical solution, when the first parking space is the target parking space, deleting the image of the first parking space other than the first image helps reduce storage overheads of the vehicle.

With reference to the tenth aspect, in some implementations of the tenth aspect, sending the first parking information to the electronic device when the first parking space is the target parking space of the vehicle includes: when the vehicle is parked in the first parking space, sending the first parking information to the electronic device; or when the vehicle is not parked in the first parking space, if it is detected that the vehicle is in a stop and non-power-off state, a driver in the vehicle leaves the vehicle, and a vehicle door is closed, sending the first parking information to the electronic device; or sending the first parking information to the electronic device in a process of parking the vehicle in the first parking space.

In some implementations, when it is determined that the first parking space is the target parking space, and the vehicle is not parked in the first parking space, if it is detected that the vehicle is in the stop and non-power-off state, the driver in the vehicle leaves the vehicle, and the vehicle door is closed, it may be determined that the vehicle is to be parked in the first parking space under control of an automatic parking function.

For example, when the vehicle cannot transmit the first parking information to the electronic device through the cloud server because the mobile communication signal in the first building is poor, if the user holds the electronic device away from the vehicle in the process of parking the vehicle in the first parking space, a distance between the vehicle and the electronic device is greater than a distance that can be implemented through wireless short-range communication. In this case, if the first parking information is sent after the vehicle is parked in the first parking space, it is clear that the first parking information fails to be sent. As a result, the user cannot obtain the information about the parking location of the vehicle. Therefore, in the foregoing technical solution, the first parking information is sent when it is determined that the first parking space is the target parking space. This helps reduce a probability of failing to transmit the first parking information, so that the user can obtain the information about the parking location of the vehicle in time through the electronic device, thereby increasing the vehicle search success rate.

With reference to the tenth aspect, in some implementations of the tenth aspect, the method further includes: when a moving distance of the vehicle between a first shift and a second shift of a gear of the vehicle is greater than or equal to a first threshold, determining that the first parking space is not the target parking space, where a moment at which the first shift is performed is earlier than a moment at which the second shift is performed.

In some implementations, the first shift may be a gear shift performed by the vehicle in the first parking space. For example, the first shift may be a last gear shift before the vehicle travels away from the first parking space. The second shift may be a gear shift when or after the vehicle is parked in the target parking space. For example, in the process of parking the vehicle in the first parking space, when the vehicle is controlled to be parked in the first parking space, and travels toward and/or is parked in a final target parking space, the first shift may be a shift from a reverse gear to a drive gear, and the second shift may be a shift from the drive gear to the reverse gear (for example, the vehicle is parked in the target parking space in a manner in which a vehicle rear is first parked in the parking space), or the second shift may be a shift from the drive gear to a parking gear (for example, the vehicle is parked in the target parking space in a manner in which a vehicle front is first parked in the parking space and is parked).

In the foregoing technical solution, it can be determined, based on the moving distance of the vehicle between the two gear shifts, that the first parking space is not the final parking space of the vehicle, and then the image of the first parking space is deleted.

It should be noted that, if the vehicle sends related information of the first parking space to the electronic device in the process of parking the vehicle in the first parking space, but the first parking space is not the target parking space, in a process of parking the vehicle in the target parking space, or after the vehicle is parked in the target parking space, the vehicle sends related information (for example, a parking space number and a location in the first building) of the target parking space to the electronic device, so that information about a parking location displayed by the electronic device to the user is information about a final parking location of the vehicle.

With reference to the tenth aspect, in some implementations of the tenth aspect, the method further includes: when a moving distance of the vehicle between a third shift and a fourth shift of the gear of the vehicle is less than or equal to a second threshold, and a distance between the vehicle and the first parking space is less than or equal to a third threshold when the fourth shift is performed on the gear, determining that the first parking space is the target parking space, where a moment at which the third shift is performed is earlier than a moment at which the fourth shift is performed.

In some implementations, the third shift may be a gear shift performed by the vehicle before the vehicle is parked in the first parking space, and the fourth shift may be a gear shift during parking in the first parking space. For example, the third shift may be a shift from the drive gear to the reverse gear, and the fourth shift may be a shift from the reverse gear to the parking gear or a shift from the drive gear to the parking gear.

In the foregoing technical solution, in a non-automatic parking scenario (for example, when the user does not set the first parking space as the target parking space during automatic parking), it can be determined, based on the moving distance of the vehicle between the two gear shifts, that the first parking space is the final parking space of the vehicle.

With reference to the tenth aspect, in some implementations of the tenth aspect, the moving distance of the vehicle is determined based on at least one of the following: longitude and latitude differences of the vehicle between the two gear shifts, or duration and a wheel speed of the vehicle between the two gear shifts.

With reference to the tenth aspect, in some implementations of the tenth aspect, the method further includes: obtaining first sensor information, where the first sensor information is information collected by a second sensor between a first moment and a second moment, the first moment is a moment at which the vehicle enters the first building, the second moment is a moment at which the vehicle travels to a second area in the first building, and the second sensor is a non-satellite positioning sensor; and determining longitude and latitude and/or a height of the second area based on the first sensor information.

In some implementations, a satellite positioning signal in the first building is poor, and consequently, it is difficult to determine a location of the vehicle through a satellite positioning sensor.

In the foregoing technical solution, when the satellite positioning signal in the first building is poor, determining longitude and latitude and/or height information of some areas in the first building through a non-satellite positioning sensor helps improve accuracy of determining a parking location of the vehicle.

With reference to the tenth aspect, in some implementations of the tenth aspect, the second area includes the first parking space. The method further includes: sending location information to the cloud server, where the location information includes the longitude and the latitude and/or the height of the second area, and first parking space information.

In the foregoing technical solution, the location information is sent to the cloud server, so that the cloud server can construct a map model in the first building. The map model indicates an association relationship between longitude and latitude and/or a height of each parking space in the first building and a parking space number of the parking space or an area (for example, a floor and/or a zone) in which the parking space is located. In this way, when the vehicle has no high-definition image shooting apparatus, or the image shooting apparatus of the vehicle is damaged or limited, and therefore the vehicle cannot determine area information and/or parking space information of a parking space of the vehicle through image recognition, the vehicle can also determine and/or obtain the area information and/or the parking space information of the parking space of the vehicle by feeding back the location information to the cloud server.

With reference to the tenth aspect, in some implementations of the tenth aspect, the second area includes a fourth parking space. The method further includes: determining information about the fourth parking space based on parking space association information and the longitude and the latitude and/or the height of the second area, where the information about the fourth parking space indicates at least one of the following: a parking space number of the fourth parking space or a location of the fourth parking space in the first building, the parking space association information indicates an association relationship between longitude and latitude and/or a height of a parking space and at least one of the following: a parking space number of the parking space or a location of the parking space in the first building.

In the foregoing technical solution, when the vehicle cannot determine the area information and/or the parking space information of the parking space of the vehicle through an obtained image, the vehicle can also determine and/or obtain the area information and/or the parking space information of the parking space of the vehicle based on the parking space association relationship and longitude and latitude and/or height information of the parking space.

With reference to the tenth aspect, in some implementations of the tenth aspect, obtaining the first group of images includes: obtaining, based on at least one of a speed of the vehicle, a traveling distance of the vehicle, or a similarity between two adjacent frames of images in a video stream captured by a first image shooting apparatus of the vehicle, the first group of images from the video stream.

In the foregoing technical solution, the image is obtained from the video stream through frame extraction based on the speed and the traveling distance of the vehicle. This can reduce a probability of obtaining a plurality of frames of images with a high similarity at a same location, thereby helping reduce computing overheads required for processing the image and storage overheads required for storing the image.

With reference to the tenth aspect, in some implementations of the tenth aspect, obtaining the first group of images from the video stream includes: when the vehicle travels at a first speed, obtaining the first group of images from the video stream at a first frame extraction frequency; and when the vehicle travels at a second speed, obtaining the first group of images from the video stream at a second frame extraction frequency, where the first speed is greater than the second speed, and the first frame extraction frequency is greater than the second frame extraction frequency.

In the foregoing technical solution, when the speed of the vehicle is higher, the image is extracted from the video stream at a higher frequency. This helps improve accuracy of determining an area in which the vehicle is located. For example, when the vehicle has traveled into an area B from an area A, a probability of still determining, based on the image, that the vehicle is in the area A can be reduced. When the speed of the vehicle is lower, the image is extracted from the video stream at a lower frequency. This can reduce a quantity of extracted image frames, thereby reducing the storage overheads and the computing overheads.

With reference to the tenth aspect, in some implementations of the tenth aspect, obtaining the first group of images from the video stream includes: when a similarity between a former frame of image and a latter frame of image in two adjacent frames of images in the video stream is less than or equal to a similarity threshold, extracting the latter frame of image as an image in the first group of images.

In the foregoing technical solution, the image is extracted from the video stream based on an image similarity, to avoid obtaining a plurality of frames of images with a high similarity, thereby helping reduce the storage overheads and computing overheads.

With reference to the tenth aspect, in some implementations of the tenth aspect, the method further includes: when a signal of a first sensor of the vehicle is shielded, controlling a second image shooting apparatus of the vehicle to capture a video stream, where the video stream captured by the second image shooting apparatus is used to determine the first area, and the first sensor is a satellite positioning sensor.

In some implementations, when the signal of the first sensor of the vehicle is shielded, the second sensor of the vehicle is controlled to collect a signal.

In the foregoing technical solution, when a signal of the satellite positioning sensor is shielded, a video stream used to determine the area in which the vehicle is located starts to be captured. This helps reduce power consumption in a process of determining the parking area.

According to an eleventh aspect, an apparatus for determining a parking area is provided. The apparatus includes an obtaining unit and a processing unit. Specifically, the obtaining unit is configured to obtain a first group of images, where the first group of images includes at least one image of a first parking space and at least one image of a first area in which the first parking space is located in a first building. The processing unit is configured to delete the at least one image of the first parking space when the first parking space is not a target parking space of a vehicle.

With reference to the eleventh aspect, in some implementations of the eleventh aspect, the apparatus further includes a first sending unit. The processing unit is further configured to: when the first parking space is the target parking space of the vehicle, determine first parking information based on the first group of images, where the first parking information indicates a location of the first parking space in the first building. The first sending unit is configured to send the first parking information to an electronic device, where the electronic device is associated with the vehicle.

With reference to the eleventh aspect, in some implementations of the eleventh aspect, the first parking information includes a first image of the first parking space, or the first parking information is determined based on the first image. The first image includes a parking space number of the first parking space. The processing unit is further configured to: when the first parking space is the target parking space of the vehicle, delete an image other than the first image from the at least one image of the first parking space.

With reference to the eleventh aspect, in some implementations of the eleventh aspect, the first sending unit is configured to: when the vehicle is parked in the first parking space, send the first parking information to the electronic device; or when the vehicle is not parked in the first parking space, if it is detected that the vehicle is in a stop and non-power-off state, a driver in the vehicle leaves the vehicle, and a vehicle door is closed, send the first parking information to the electronic device; or send the first parking information to the electronic device in a process of parking the vehicle in the first parking space.

With reference to the eleventh aspect, in some implementations of the eleventh aspect, the processing unit is further configured to: when a moving distance of the vehicle between a first shift and a second shift of a gear of the vehicle is greater than or equal to a first threshold, determine that the first parking space is not the target parking space, where a moment at which the first shift is performed is earlier than a moment at which the second shift is performed.

With reference to the eleventh aspect, in some implementations of the eleventh aspect, the processing unit is further configured to: when a moving distance of the vehicle between a third shift and a fourth shift of the gear of the vehicle is less than or equal to a second threshold, and a distance between the vehicle and the first parking space is less than or equal to a third threshold when the fourth shift is performed on the gear, determine that the first parking space is the target parking space, where a moment at which the third shift is performed is earlier than a moment at which the fourth shift is performed.

With reference to the eleventh aspect, in some implementations of the eleventh aspect, the moving distance of the vehicle is determined based on at least one of the following: longitude and latitude differences of the vehicle between the two gear shifts, or duration and a wheel speed of the vehicle between the two gear shifts.

With reference to the eleventh aspect, in some implementations of the eleventh aspect, the obtaining unit is further configured to: obtain first sensor information, where the first sensor information is information collected by a second sensor between a first moment and a second moment, the first moment is a moment at which the vehicle enters the first building, the second moment is a moment at which the vehicle travels to a second area in the first building, and the second sensor is a non-satellite positioning sensor. The processing unit is further configured to determine longitude and latitude and/or a height of the second area based on the first sensor information.

With reference to the eleventh aspect, in some implementations of the eleventh aspect, the second area includes the first parking space. The apparatus further includes a second sending unit, configured to send location information to a cloud server, where the location information includes the longitude and the latitude and/or the height of the second area, and first parking space information.

With reference to the eleventh aspect, in some implementations of the eleventh aspect, the second area includes a fourth parking space. The processing unit is further configured to determine information about the fourth parking space based on parking space association information and the longitude and the latitude and/or the height of the second area, where the information about the fourth parking space indicates at least one of the following: a parking space number of the fourth parking space or a location of the fourth parking space in the first building, the parking space association information indicates an association relationship between longitude and latitude and/or a height of a parking space and at least one of the following: a parking space number of the parking space or a location of the parking space in the first building.

With reference to the eleventh aspect, in some implementations of the eleventh aspect, the obtaining unit is configured to obtain, based on at least one of a speed of the vehicle, a traveling distance of the vehicle, or a similarity between two adjacent frames of images in a video stream captured by a first image shooting apparatus of the vehicle, the first group of images from the video stream.

With reference to the eleventh aspect, in some implementations of the eleventh aspect, the obtaining unit is configured to: when the vehicle travels at a first speed, obtain the first group of images from the video stream at a first frame extraction frequency; and when the vehicle travels at a second speed, obtain the first group of images from the video stream at a second frame extraction frequency, where the first speed is greater than the second speed, and the first frame extraction frequency is greater than the second frame extraction frequency.

With reference to the eleventh aspect, in some implementations of the eleventh aspect, the obtaining unit is configured to: when a similarity between a former frame of image and a latter frame of image in two adjacent frames of images in the video stream is less than or equal to a similarity threshold, extract the latter frame of image as an image in the first group of images.

With reference to the eleventh aspect, in some implementations of the eleventh aspect, the processing unit is configured to: when a signal of a first sensor of the vehicle is shielded, control a second image shooting apparatus of the vehicle to capture a video stream, where the video stream captured by the second image shooting apparatus is used to determine the first area, and the first sensor is a satellite positioning sensor.

According to a twelfth aspect, an apparatus for determining a parking area is provided. The apparatus includes a processor, configured to execute a computer program stored in a memory, to enable the apparatus to perform the method according to any possible implementation of the tenth aspect.

With reference to the twelfth aspect, in some implementations of the twelfth aspect, the control apparatus further includes the memory.

According to a thirteenth aspect, a vehicle is provided. The vehicle includes the apparatus according to any one of the possible implementations of the eleventh and twelfth aspects.

According to a fourteenth aspect, a computer program product is provided. The computer program product includes computer program code. When the computer program code is run on a computer or a processor, the computer or the processor is enabled to perform the method according to any one of the possible implementations of the tenth aspect.

It should be noted that the computer program code may be completely or partially stored in a storage medium. The storage medium may be encapsulated with a processor, or encapsulated separately from the processor.

According to a fifteenth aspect, a computer-readable medium is provided. The computer-readable medium stores instructions. When the instructions are executed by a processor, the processor is enabled to implement the method according to any one of the possible implementations of the tenth aspect.

According to a sixteenth aspect, a chip is provided. The chip includes a circuit. The circuit is configured to perform the method according to any one of the possible implementations of the tenth aspect.

### BRIEF DESCRIPTION OF DRAWINGS

FIG. 1 is a functional block diagram of an intelligent driving device according to an embodiment of this application;
FIG. 2 is a schematic flowchart of a method for determining a parking area according to an embodiment of this application;
FIG. 3 is another schematic flowchart of a method for determining a parking area according to an embodiment of this application;
FIG. 4 is a diagram of an application scenario according to an embodiment of this application;
FIG. 5 is another schematic flowchart of a method for determining a parking area according to an embodiment of this application;
FIG. 6 is another schematic flowchart of a method for determining a parking area according to an embodiment of this application;
FIG. 7 is a diagram of a parking lot according to an embodiment of this application;
FIG. 8 is a diagram of a system architecture according to an embodiment of this application;
FIG. 9 is another schematic flowchart of a method for determining a parking area according to an embodiment of this application;
FIG. 10 is a block diagram of an apparatus for determining a parking area according to an embodiment of this application;
FIG. 11 is another block diagram of an apparatus for determining a parking area according to an embodiment of this application;
FIG. 12 is a block diagram of a system for determining a parking area according to an embodiment of this application; and
FIG. 13 is another schematic flowchart of a method for determining a parking area according to an embodiment of this application.

### DESCRIPTION OF EMBODIMENTS

With reference to accompanying drawings, the following describes technical solutions in this application.

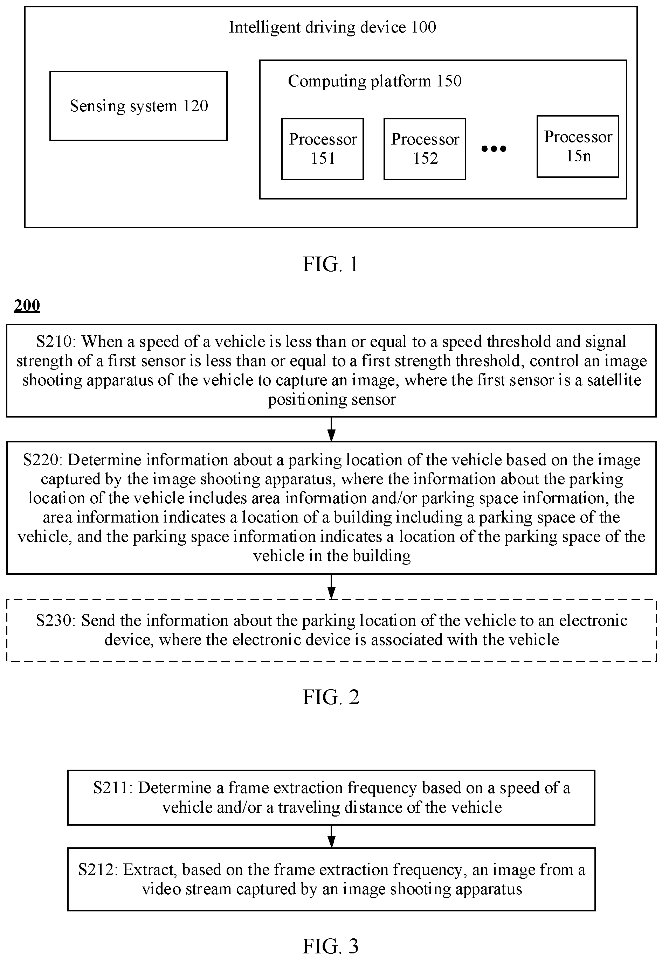

FIG. 1 is a functional block diagram of an intelligent driving device according to an embodiment of this application. As shown in FIG. 1, the intelligent driving device 100 may include a sensing system 120 and a computing platform 150. The sensing system 120 may include several types of sensors configured to sense information about an environment around the intelligent driving device 100. For example, the sensing system 120 may further include a positioning system. The positioning system may be a global positioning system (global positioning system, GPS), a BeiDou system, or another positioning system. For another example, the sensing system 120 may further include one or more of an inertial measurement unit (inertial measurement unit, IMU), a lidar, a millimeter-wave radar, an ultrasonic radar, and an image shooting apparatus. In this application, the image shooting apparatus may include but is not limited to a fisheye camera and a wide-angle camera. The image shooting apparatus may include a red, green, and blue/infrared (red, green, and blue/infrared, RGB/IR) camera lens, or may include a depth camera, for example, a time of flight (time of flight, TOF) camera, a binocular camera, or a structured light camera. The image shooting apparatus may include a front-view camera lens, a rear-view camera lens, a side-view camera lens, and the like based on deployment locations.

A part or all of functions of the intelligent driving device 100 may be controlled by the computing platform 150. The computing platform 150 may include processors 151 to 15n. The processor is a circuit having a signal processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function based on a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, a field programmable gate array (field programmable gate array, FPGA). In the reconfigurable hardware circuit, a process in which the processor loads a configuration document to implement configuration of the hardware circuit may be understood as a process in which the processor loads instructions to implement functions of a part or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 150 may further include a memory. The memory is configured to store instructions. A part or all of the processors 151 to 15n may invoke the instructions in the memory, to implement a corresponding function.

The intelligent driving device in this embodiment of this application may include a road transport means, a water transport means, an air transport means, an industrial device, an agricultural device, an entertainment device, or the like. For example, the intelligent driving device may be a vehicle. The vehicle is a vehicle in a broad sense, and may be a transport tool (for example, a commercial vehicle, a passenger vehicle, a motorcycle, an airborne vehicle, or a train), an industrial vehicle (for example, a pallet truck, a trailer, or a tractor), an engineering vehicle (for example, an excavator, a bulldozer, or a crane), an agricultural device (for example, a lawn mower or a harvester), a recreational device, a toy vehicle, or the like. A type of the vehicle is not specifically limited in embodiments of this application.

For example, the computing platform 150 may include at least one of the following domain controllers: a vehicle domain controller (vehicle domain controller, VDC), an advanced driving domain controller (advanced driving domain controller, ADC), and a cockpit domain controller (cockpit domain controller, CDC). Alternatively, the computing platform 150 may include any one of an in-car application server (in-car application server, ICAS) controller, a body domain controller (body domain controller, BDC), a special equipment system (special equipment system, SAS), a media graphics unit (media graphics unit, MGU), a body super core (body super core, BSC), and an advanced driving assistant system super core (advanced driving assistant system super core, ADAS super core). This is not limited in this application. An ICAS may include at least one of the following: a vehicle control server ICAS 1, an intelligent driving server ICAS 2, an intelligent cockpit server ICAS 3, and an infotainment server ICAS 4. Alternatively, the computing platform 150 may further include a vehicle central computer (Vehicle Central Computer, VCC).

The following describes solutions provided in embodiments of this application by using an example in which the intelligent driving device is a vehicle.

FIG. 2 is a schematic flowchart of a method for determining a parking area according to an embodiment of this application. The method 200 shown in FIG. 2 may be performed by the computing platform 150 shown in FIG. 1. Specifically, the method 200 may include the following steps.

S210: When a speed of a vehicle is less than or equal to a speed threshold and signal strength of a first sensor is less than or equal to a first strength threshold, control an image shooting apparatus of the vehicle to capture an image, where the first sensor is a satellite positioning sensor.

For example, the first sensor may be a global navigation satellite system (global navigation satellite system, GNSS), or the first sensor may be another satellite positioning sensor that performs positioning through a satellite. The GNSS may include at least one of the following: a GPS, a global navigation satellite system (global navigation satellite system, GLONASS), a BeiDou navigation satellite system (BeiDou navigation satellite system, BDS), a quasi-zenith satellite system (quasi-zenith satellite system, QZSS), or a satellite based augmentation system (satellite based augmentation system, SBAS).

When the speed of the vehicle is less than or equal to the speed threshold and the signal strength of the first sensor is less than or equal to the first strength threshold, it may be considered that the vehicle enters an underground parking lot.

In some implementations, the image shooting apparatus captures a video stream, and extracts one or more frames of images from the video stream for storage. The one or more frames of images are images captured by the image shooting apparatus. In view of this, S210 may be refined into S211 and S212 shown in FIG. 3.

S211: Determine a frame extraction frequency based on the speed of the vehicle and/or a traveling distance of the vehicle.

For example, if the speed of the vehicle is higher, the frame extraction frequency is increased, or if the speed of the vehicle is lower, the frame extraction frequency is decreased.

For example, determining the frame extraction frequency based on the traveling distance of the vehicle may include: extracting one frame of image from the video stream each time the vehicle travels a preset distance. The preset distance may be, for example, 1 meter, 2 meters, or another distance.

S212: Extract, based on the frame extraction frequency, the image from the video stream captured by the image shooting apparatus.

It may be understood that, when the vehicle stops, no image may be extracted from the video stream.

S220: Determine information about a parking location of the vehicle based on the image captured by the image shooting apparatus, where the information about the parking location of the vehicle includes area information and/or parking space information, the area information indicates a location of a building including a parking space of the vehicle, and the parking space information indicates a location of the parking space of the vehicle in the building.

In some implementations, the area information indicates the location of the building including the parking space of the vehicle. For example, if the building is a xx block, and is located at No. xx, xx Road, xx District, xx City, the area information may be a location of the xx block, namely, "No. xx, xx Road, xx District, xx City". Alternatively, the area information may indicate the location of the building and a floor on which the vehicle is located in the building. For example, if the vehicle is located on a basement level 1 (B1) of a xx block, the area information may alternatively be a floor on which the vehicle is located in the xx block, namely, "B1 level, xx Block, No. xx, xx Road, xx District, xx City".

In some implementations, the parking space information indicates the location of the parking space of the vehicle in the building, and may include a floor number, an area number, and a parking space number of the parking space. For example, if the parking space is a parking space 203 in an area B on a B1 level of a xx block, the parking space information may be "the parking space 203 in the area B on the B1 level". Alternatively, when the area information indicates the floor on which the vehicle is located in the building, the parking space information may include only the area number and the parking space number of the parking space. For example, if the parking space is a parking space 203 in an area B on a B1 level of a xx block, the parking space information may be "the parking space 203 in the area B".

In some implementations, controlling the image shooting apparatus of the vehicle to capture the image may include: controlling a front-view camera lens and/or a side-view camera lens to capture a first-type image, and controlling a rear-view camera lens to capture a second-type image. Further, determining the information about the parking location of the vehicle based on the image captured by the image shooting apparatus includes: determining the area information based on the first-type image, determining the parking space information based on the second-type image, and determining the information about the parking location of the vehicle based on the area information and the parking space information.

It may be understood that capturing images by different image shooting apparatuses helps reduce a visual blind spot, reduce a probability of mistakenly determining and incorrectly determining a vehicle location, and improve robustness of the method for determining a parking area provided in this application.

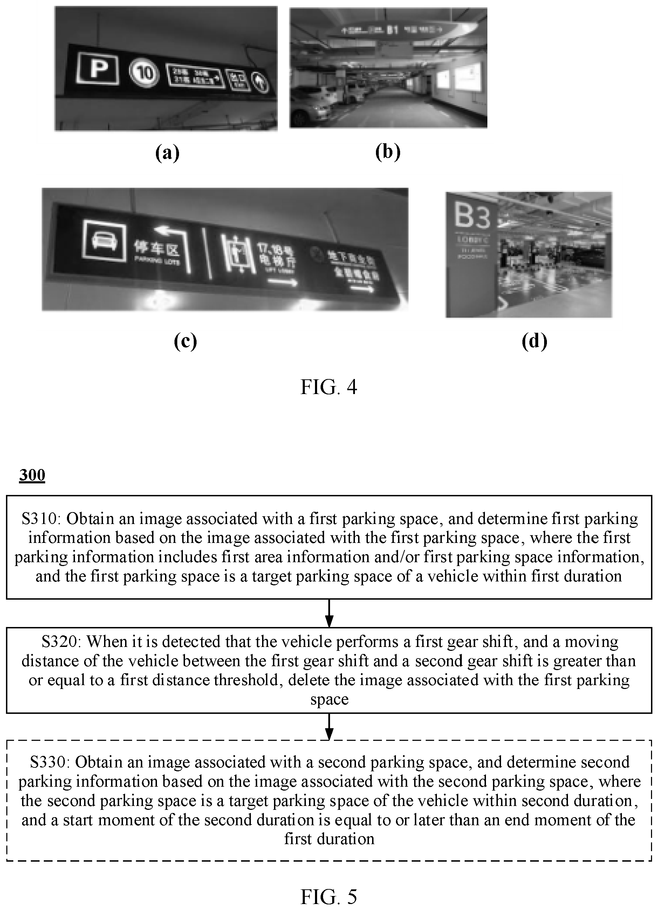

For example, (a) to (d) in FIG. 4 show some examples of the first-type image.

It should be noted that, in this embodiment of this application, the area information may alternatively be determined through information such as an altitude, atmospheric pressure, geomagnetism, or a wireless fidelity (wireless fidelity, Wi-Fi) signal.

Optionally, the method 200 further includes S230: sending the information about the parking location of the vehicle to an electronic device, where the electronic device is associated with the vehicle.

It should be noted that, in this application, that the electronic device is associated with the vehicle may include: Accounts logged in to the electronic device and the vehicle are the same; or although the accounts logged in to the electronic device and the vehicle are different, both are accounts of an authorized user of the vehicle; or the electronic device is authorized by the authorized user of the vehicle, and accordingly, an association relationship is established between the vehicle and the electronic device.

In some implementations, S230 is performed when at least one of the following is detected: A vehicle gear is a parking gear, a driver of the vehicle leaves the vehicle, the vehicle is powered off, and a vehicle door is locked.

Further, after receiving the information about the parking location of the vehicle, the electronic device may display related information, to prompt a user of the vehicle with the parking location of the vehicle.

FIG. 5 is another schematic flowchart of a method for determining a parking area according to an embodiment of this application. A method 300 shown in FIG. 5 may be performed by the computing platform 150 shown in FIG. 1. Specifically, the method 300 may include the following steps.

S310: Obtain an image associated with a first parking space, and determine first parking information based on the image associated with the first parking space, where the first parking information includes first area information and/or first parking space information, and the first parking space is a target parking space of a vehicle within first duration.

The first area information indicates a location of a first building including the first parking space. The first parking space information indicates a location of the first parking space in the first building.

For example, the image associated with the first parking space may be understood as an image captured in a process of traveling toward and/or parking in the first parking space. For a method for capturing the image associated with the first parking space, refer to the descriptions in the method 200. Details are not described herein again.

S320: When it is detected that the vehicle performs a first gear shift, and a moving distance of the vehicle between the first gear shift and a second gear shift is greater than or equal to a first distance threshold, delete the image associated with the first parking space.

A moment at which the second gear shift is performed is earlier than a moment at which the first gear shift is performed.

In some implementations, the image associated with the first parking space is stored in a storage apparatus of the vehicle. Deleting the image associated with the first parking space includes: deleting the image that is associated with the first parking space and that is stored in the storage apparatus of the vehicle.

In some implementations, the first gear shift may be a shift of the vehicle from a reverse gear to a drive gear, and the second gear shift may also be a shift of the vehicle from the reverse gear to the drive gear. The first gear shift and the second gear shift may be two same gear shifts closest to each other. To be specific, another gear shift may be further performed between the first gear shift and the second gear shift, but a type of the another gear shift is not a "shift from the reverse gear to the drive gear". For example, each time the vehicle shifts from the reverse gear to the drive gear, location information of a current location of the vehicle is recorded. For example, the location information may be longitude and latitude information.

In some other implementations, the first gear shift and the second gear shift may be two gear shifts closest to each other. To be specific, no other gear shift is performed between the first gear shift and the second gear shift. In this case, the first gear shift and the second gear shift may be gear shifts of different types. For example, the first gear shift is a shift from the drive gear to the reverse gear, and the second gear shift is a shift from the reverse gear to the drive gear. For example, each time the vehicle performs a gear shift, location information of a current location of the vehicle is recorded.

For example, the moving distance between the first gear shift and the second gear shift may be a distance obtained through calculation based on location information recorded when the two gear shifts are performed. Location information recorded when a gear shift is performed may include at least one of the following: a height, longitude and latitude, or satellite positioning information. For example, the moving distance between the first gear shift and the second gear shift may alternatively be determined based on a wheel speed of the vehicle and duration between the two gear shifts.

In some implementations, after S310 is performed, the method may further include: when it is detected that the vehicle performs a third gear shift, and a moving distance of the vehicle between the third gear shift and the second gear shift is less than or equal to a second distance threshold, sending the first parking information to an electronic device, where the moment at which the second gear shift is performed is earlier than a moment at which the third gear shift is performed.

For example, the electronic device is associated with the vehicle.

For example, the third gear shift may be a shift from the reverse gear to a parking gear, or a shift from the drive gear to the parking gear. For a method for determining the moving distance between the third gear shift and the second gear shift, refer to the descriptions in the foregoing implementation. Details are not described herein again.

Optionally, after S320 is performed, the method further includes S330: obtaining an image associated with a second parking space, and determining second parking information based on the image associated with the second parking space, where the second parking space is a target parking space of the vehicle within second duration, and a start moment of the second duration is equal to or later than an end moment of the first duration.

The second parking information includes second area information and/or second parking space information. The second area information indicates the location of the first building including the second parking space. The second parking space information indicates a location of the second parking space in the first building.

For example, the image associated with the second parking space may be understood as an image captured in a process of traveling toward and/or parking in the second parking space. For a method for capturing the image associated with the second parking space, refer to the descriptions in the method 200. Details are not described herein again.

In some implementations, after S330 is performed, the method further includes: sending the second parking information to the electronic device.

In this embodiment of this application, for an occasion of sending the first parking information and/or the second parking information to the electronic device, refer to the descriptions in the method 200, and for a method for obtaining the image associated with the first parking space, refer to the descriptions in the method 200. Details are not described herein again.

In the parking process of the vehicle, because parking difficulties of parking spaces are different, a plurality of parking spaces may be sequentially selected as target parking spaces. For the foregoing case, in the method for determining a parking area provided in this embodiment of this application, only parking information of a final parking space of the vehicle may be sent to the electronic device, and a locally stored image associated with another parking space can be cleared. This can reduce storage overheads of the vehicle.

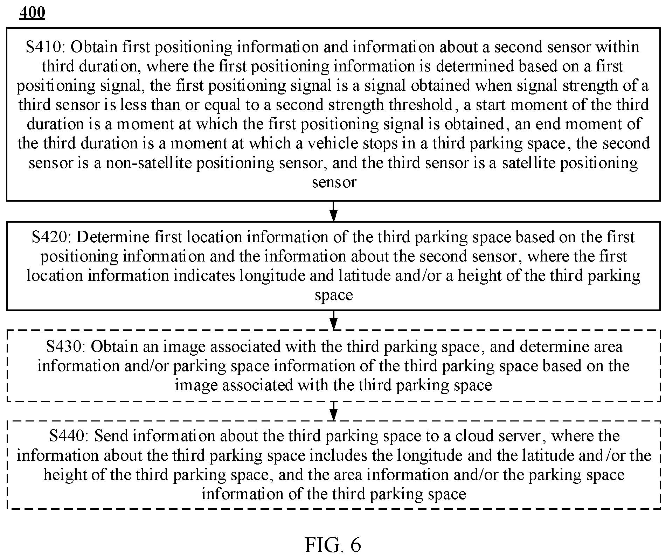

FIG. 6 is another schematic flowchart of a method for determining a parking area according to an embodiment of this application. The method 400 shown in FIG. 6 may be performed by the computing platform 150 shown in FIG. 1. Specifically, the method 400 may include the following steps.

In a parking process of a vehicle, because parking difficulties of parking spaces are different, a plurality of parking spaces may be sequentially selected as target parking spaces. For the foregoing case, in the method for determining a parking area provided in this embodiment of this application, only parking information of a final parking space of the vehicle may be sent to an electronic device, and a locally stored image associated with another parking space can be cleared. This can reduce storage overheads of the vehicle.

FIG. 6 is another schematic flowchart of a method for determining a parking area according to an embodiment of this application. The method 400 shown in FIG. 6 may be performed by the computing platform 150 shown in FIG. 1. Specifically, the method 400 may include the following steps.

S410: Obtain first positioning information and information about a second sensor of a vehicle within third duration, where the first positioning information is determined based on a first positioning signal, the first positioning signal is a signal obtained when signal strength of a third sensor is less than or equal to a second strength threshold, a start moment of the third duration is a moment at which the first positioning signal is obtained, an end moment of the third duration is a moment at which the vehicle stops in a third parking space, the second sensor is a non-satellite positioning sensor, and the third sensor is a satellite positioning sensor.

For example, the second sensor may include an IMU and/or a wheel speed sensor, and the second sensor may alternatively be another sensor that does not depend on satellite positioning. The third sensor may be a GNSS, or the third sensor may be another satellite positioning sensor that performs positioning through a satellite.

For example, the first positioning signal may be a positioning signal collected for a last time before a signal of the third sensor disappears.

S420: Determine first location information of the third parking space based on the first positioning information and the information about the second sensor, where the first location information indicates longitude and latitude and/or a height of the third parking space.

In some implementations, the method further includes S430 and S440. S430 includes: obtaining an image associated with the third parking space, and determining area information and/or parking space information of the third parking space based on the image associated with the third parking space.

For example, for a method for obtaining the image associated with the third parking space and a method for determining the area information and/or the parking space information of the third parking space, refer to the descriptions in the method 200. For example, the third parking space may be the second parking space in the method 300, namely, a final parking space of the vehicle.

S440 includes: sending information about the third parking space to a cloud server, where the information about the third parking space includes the longitude and the latitude and/or the height of the third parking space, and the area information and/or the parking space information of the third parking space.

For example, the area information in S430 indicates a location of a second building including the third parking space, and the parking space information indicates a location of the third parking space in the second building.

In some implementations, the vehicle may further feed back landmark information in the second building to the cloud server, for example, location information corresponding to a charging pile and a payment code in the second building.

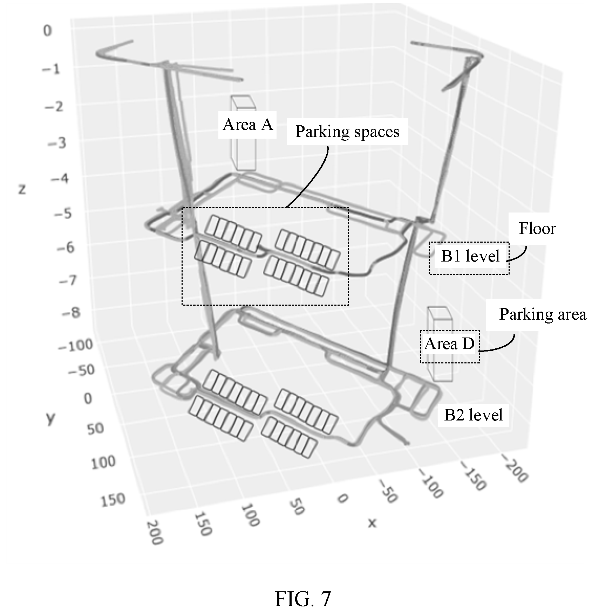

The cloud server may obtain location information (longitude, latitude, and heights) and area information/parking space information from a plurality of vehicles in the second building, and establish an association relationship between a point (or an area) indicated by location information in the second building and area information/parking space information based on the foregoing information. In some implementations, the cloud server may improve related information in the second building by collecting tagged data and crowdsourced data. For example, the cloud server may establish a model diagram of the second building shown in FIG. 7 based on the foregoing information. In this way, after a vehicle travels into the second building and is parked in a parking space, the vehicle can send location information of the parking space of the vehicle to the cloud server, and the cloud server can determine area information and/or parking space information of the parking space based on the location information. In other words, when the vehicle has no high-definition image shooting apparatus, or an image shooting apparatus of the vehicle is damaged or limited, and therefore the vehicle cannot determine the area information and/or the parking space information of the parking space of the vehicle through image recognition, the vehicle can also determine and/or obtain the area information and/or the parking space information of the parking space of the vehicle by feeding back the location information to the cloud server. Further, the cloud server may send the area information and/or the parking space information of the parking space of the vehicle to the electronic device associated with the vehicle.

It should be noted that the method for determining the location information in S410 and S420 may also be applied to S320, to determine location information recorded when a gear shift is performed.

In some implementations, when the vehicle enters the second building a plurality of times, the vehicle may construct a local database for the second building. The local database includes the association relationship between a point (or an area) indicated by location information in the second building and area information/parking space information. In this way, when the vehicle enters the second building again and is parked at a previously parked location, only location information may be determined, and then area information and/or parking space information of the parking location of the vehicle are/is determined based on the location information and the local database. Further, the vehicle may send the area information and/or the parking space information of the parking location to the electronic device associated with the vehicle.

In some implementations, after receiving the area information and/or the parking space information of the parking location of the vehicle, the electronic device may generate a navigation path from a current location of the electronic device to the parking location of the vehicle, to navigate for the user.

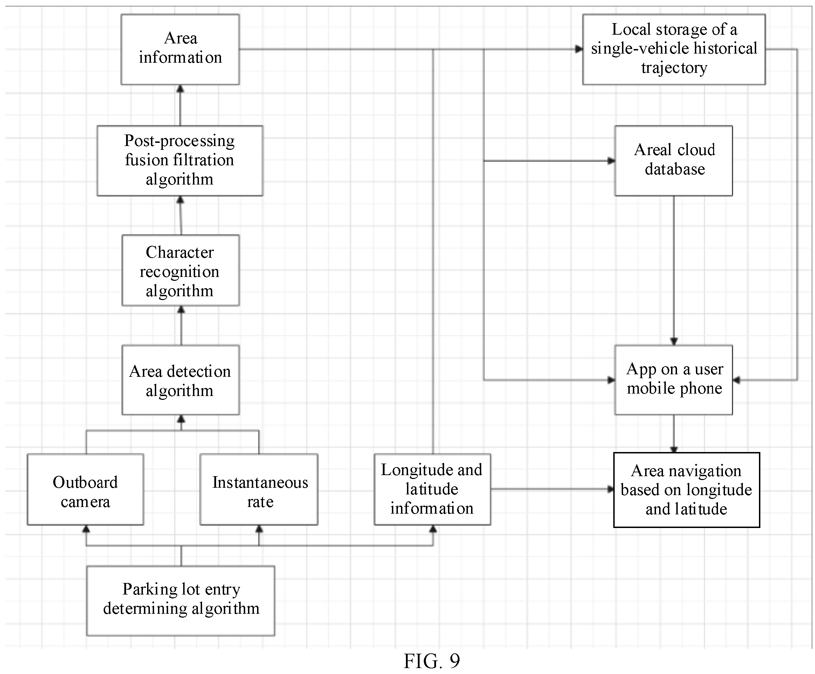

FIG. 9 is another flowchart of a method for determining a parking area according to an embodiment of this application. As shown in FIG. 9, a computing platform of a vehicle may use an outboard image shooting apparatus as an input source, perform area recognition and character recognition on a picture captured by the outboard image shooting apparatus, perform fusion filtration on recognition results according to a post-processing algorithm, and finally upload area information to an application (application, APP) on a user mobile phone. With reference to real-time longitude and latitude information in a parking lot, a single-vehicle historical trajectory information library is established, and data is uploaded to a cloud database. The cloud database is improved by collecting tagged data and crowdsourced data. In a subsequent parking scenario, the area information is directly delivered to the APP on the user mobile phone through the longitude and latitude information. In this application, with reference to the longitude and latitude information and the area information, the APP on the user mobile phone can navigate to guide a user to a corresponding parking space.

In embodiments of this application, unless otherwise stated or there is a logic conflict, terms and/or descriptions in embodiments are consistent and may be mutually referenced, and technical features in different embodiments may be combined based on an internal logical relationship thereof, to form a new embodiment.

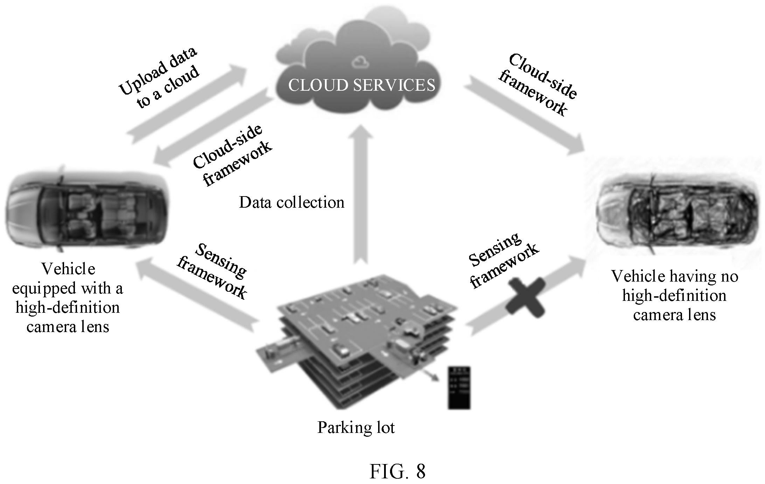

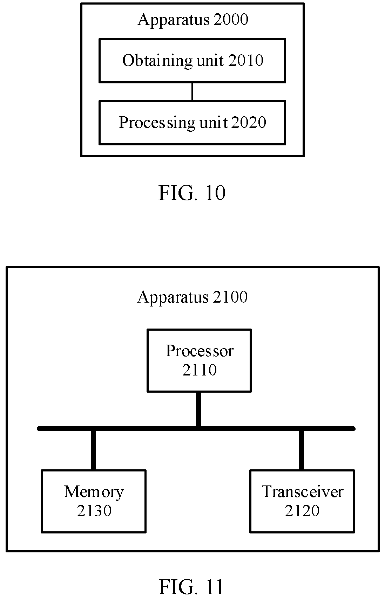

With reference to FIG. 1 to FIG. 9, the foregoing describes in detail the methods for determining a parking area provided in embodiments of this application. With reference to FIG. 10 and FIG. 11, the following describes apparatuses for determining a parking area provided in embodiments of this application. It should be understood that descriptions of apparatus embodiments correspond to the descriptions of the method embodiments. Therefore, for content that is not described in detail, refer to the foregoing method embodiments. For brevity, details are not described herein again.

FIG. 10 is a block diagram of an apparatus 2000 for determining a parking area according to an embodiment of this application. The apparatus 2000 may include units configured to perform methods in the method 200, the method 300, and the method 400. In addition, the units in the apparatus 2000 are used to implement corresponding procedures of the method embodiments in the method 200, the method 300, and the method 400.

The apparatus 2000 includes an obtaining unit 2010 and a processing unit 2020. When the apparatus 2000 is configured to perform the method 300, the obtaining unit 2010 is configured to obtain an image associated with a first parking space. The processing unit 2020 is configured to determine first parking information based on the image associated with the first parking space, where the first parking information includes first area information and/or second parking space information, the first parking space is a target parking space of a vehicle within first duration, the first area information indicates a location of a first building including the first parking space, and the first parking space information indicates a location of the first parking space in the first building. The processing unit 2020 is further configured to: when it is detected that the vehicle performs a first gear shift, and a moving distance of the vehicle between the first gear shift and a second gear shift is greater than or equal to a first distance threshold, delete the image associated with the first parking space, where a moment at which the second gear shift is performed is earlier than a moment at which the first gear shift is performed; or when it is detected that the vehicle performs a third gear shift, and a moving distance of the vehicle between the third gear shift and the second gear shift is less than or equal to a second distance threshold, send the first parking information to an electronic device, where the moment at which the second gear shift is performed is earlier than a moment at which the third gear shift is performed, and the electronic device is associated with the vehicle.

In some implementations, the obtaining unit 2010 is further configured to obtain an image associated with a second parking space. The processing unit 2020 is configured to determine second parking information based on the image associated with the second parking space, where the second parking information includes second area information and/or second parking space information, the second parking space is a target parking space of the vehicle within second duration, a start moment of the second duration is equal to or later than an end moment of the first duration, the second area information indicates the location of the first building, and the second parking space information indicates a location of the second parking space in the first building.

In some implementations, the processing unit 2020 is further configured to send the second parking information to the electronic device.

In some implementations, the processing unit 2020 is further configured to: before the obtaining unit 2010 obtains the image associated with the first parking space, when a speed of the vehicle is less than or equal to a speed threshold, and signal strength of a first sensor is less than or equal to a first strength threshold, control an image shooting apparatus of the vehicle to capture a video stream, where the video stream includes the image associated with the first parking space, and the first sensor is a satellite navigation sensor.

In some implementations, the processing unit 2020 is configured to determine a frame extraction frequency based on the speed of the vehicle and/or a traveling distance of the vehicle. The obtaining unit is configured to obtain, from the video stream based on the frame extraction frequency, the image associated with the first parking space.

When the apparatus 2000 is configured to perform the method 400, the obtaining unit 2010 is configured to obtain first positioning information and information about a second sensor of a vehicle within third duration, where the first positioning information is determined based on a first positioning signal, the first positioning signal is a signal obtained when signal strength of a third sensor is less than or equal to a second strength threshold, a start moment of the third duration is a moment at which the first positioning signal is obtained, an end moment of the third duration is a moment at which the vehicle stops in a third parking space, the second sensor is a non-satellite positioning sensor, and the third sensor is a satellite positioning sensor. The processing unit 2020 is configured to determine first location information of the third parking space based on the first positioning information and the information about the second sensor, where the first location information indicates longitude and latitude and/or a height of the third parking space.

In some implementations, the obtaining unit 2010 is further configured to: obtain an image associated with the third parking space, and determine area information and/or parking space information of the third parking space based on the image associated with the third parking space, where the area information indicates a location of a second building including the third parking space, and the parking space information indicates a location of the third parking space in the second building. The processing unit 2020 is further configured to send information about the third parking space to a cloud server, where the information about the third parking space includes the longitude and the latitude and/or the height of the third parking space, and the area information and/or the parking space information of the third parking space.

In some implementations, the processing unit 2020 is further configured to send the first location information to the cloud server, where the first location information is used to determine a location of a building including the third parking space and/or a location of the third parking space in the building.

For example, the obtaining unit 2010 and the processing unit 2020 may be disposed in the intelligent driving device shown in FIG. 1. More specifically, the obtaining unit 2010 and the processing unit 2020 may be disposed in the computing platform 150. For example, operations performed by the obtaining unit 2010 and the processing unit 2020 may be performed by one processor, or may be performed by different processors. In a specific implementation process, the one or more processors may be processors disposed in the intelligent driving device 100 shown in FIG. 1. The apparatus 2000 may be a chip disposed in the intelligent driving device 100.

In a specific implementation process, the units in the foregoing apparatus may be all or partially integrated, or may be independently implemented. In an implementation, these units are integrated and implemented in a form of a system-on-a-chip (system-on-a-chip, SoC).

FIG. 11 is another block diagram of an apparatus for determining a parking area according to an embodiment of this application. The apparatus 2100 shown in FIG. 11 may include a processor 2110, a transceiver 2120, and a memory 2130. The processor 2110, the transceiver 2120, and the memory 2130 are connected to each other through an internal connection path. The memory 2130 is configured to store instructions. The processor 2110 is configured to execute the instructions stored in the memory 2130, to implement the methods in the foregoing embodiments. Optionally, the memory 2130 may be coupled to the processor 2110 through an interface, or may be integrated with the processor 2110.

It should be noted that the transceiver 2120 may include but is not limited to a transceiver apparatus like an input/output interface (input/output interface), to implement communication between the apparatus 2100 and another device or a communication network.

The memory 2130 may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, and not limitation, the RAM includes the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

The transceiver 2120 uses, for example, but not limited to, a transceiver apparatus like a transceiver, to implement communication between the apparatus 2110 and another device or a communication network, to receive/send data/information used to implement the methods in the foregoing embodiments.

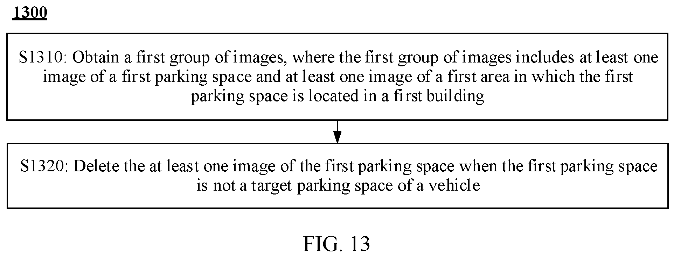

FIG. 13 is a schematic flowchart of a method for determining a parking area according to an embodiment of this application. A method 1300 shown in FIG. 13 may be performed by the computing platform 150 shown in FIG. 1. Specifically, the method 1300 may include the following steps.

S1310: Obtain a first group of images, where the first group of images includes at least one image of a first parking space and at least one image of a first area in which the first parking space is located in a first building.

In some implementations, an image of each parking space is an image including a parking space number. When an image includes a parking space number of the first parking space, it may be determined that the image is the image of the first parking space. An image of each area is an image (for example, the image shown in FIG. 4) including an area number or a floor number. An area in which a vehicle is located may be determined based on an area number or a floor number included in an image.

It should be noted that an area in which the vehicle is located in the first building in this embodiment is a space, for example, a floor or an area on the floor, in the first building. The first building may be an underground parking lot, or may be a building including the underground parking lot. Alternatively, the first building may be another building including a parking space.

For example, the first building may include a plurality of areas, and each area includes one or more parking spaces. In this case, the first area may be one of the plurality of areas. In an example, the first building includes a plurality of floors for parking, for example, a basement level 1, a basement level 2, and a 6^{th} floor. In this case, each floor may be considered as one area. For example, the "B1 level" may be an example of the first area. For another example, if a floor in the first building is large and is divided into a plurality of areas, for example, an area A, an area B, and an area C, each area may be considered as one area. For example, the "area B" may be an example of the first area, or an "area B on the B1 level" may be an example of the first area.

For example, an image shooting apparatus that captures the at least one image of the first parking space is different from an image shooting apparatus that captures the at least one image of the first area. For example, the at least one image of the first area may be captured by a front-view camera lens and/or a side-view camera lens, and the at least one image of the first parking space may be captured by a rear-view camera lens.

In some implementations, the first group of images is obtained from a video stream captured by one or more image shooting apparatuses. More specifically, the first group of images is obtained, based on at least one of a speed of the vehicle, a traveling distance of the vehicle, or a similarity between two adjacent frames of images in a video stream captured by a first image shooting apparatus of the vehicle, from the video stream.

In an example, when the vehicle travels at a first speed, the first group of images is obtained from the video stream at a first frame extraction frequency; and when the vehicle travels at a second speed, the first group of images is obtained from the video stream at a second frame extraction frequency, where the first speed is greater than the second speed, and the first frame extraction frequency is greater than the second frame extraction frequency.

In another example, when a similarity between a former frame of image and a latter frame of image in two adjacent frames of images in the video stream is less than or equal to a similarity threshold, the latter frame of image is extracted as an image in the first group of images. For example, the similarity threshold may be 90%, or the similarity threshold may be 95%, or the similarity threshold may be another value.

For a more detailed implementation of obtaining the image from the video stream, refer to the descriptions in the method 200. Details are not described herein again.

In some implementations, when a signal of a first sensor of the vehicle is shielded, a second image shooting apparatus of the vehicle is controlled to capture a video stream, where the video stream captured by the second image shooting apparatus is used to determine the first area, and the first sensor is a satellite positioning sensor. For example, the first image shooting apparatus may include the second image shooting apparatus, and the second image shooting apparatus may be an image shooting apparatus configured to capture the second-type image in the method 200.

S1320: Delete the at least one image of the first parking space when the first parking space is not a target parking space of the vehicle.

In some implementations, if an image includes only the first parking space, deleting the at least one image of the first parking space may include: deleting the image including only the first parking space. In some other implementations, if the image includes a plurality of parking spaces, when the first parking space is not the target parking space, and an adjacent parking space of the first parking space is not the target parking space either, deleting the at least one image of the first parking space includes: deleting all images including the first parking space; or when the first parking space is not the target parking space, but the adjacent parking space of the first parking space is the target parking space, deleting an image other than the image including the adjacent parking space of the first parking space from the at least one image of the first parking space.

In some implementations, when a moving distance of the vehicle between a first shift and a second shift of a gear of the vehicle is greater than or equal to a first threshold, it is determined that the first parking space is not the target parking space, where a moment at which the first shift is performed is earlier than a moment at which the second shift is performed. For example, the first shift may be the second gear shift in the method 300, and the second shift may be the first gear shift in the method 300. For more detailed descriptions of the first shift and the second shift, refer to the descriptions in the method 300. Details are not described herein again. For example, the first threshold and the foregoing first distance threshold are a same value, or the first threshold may be another value.

In some implementations, when the first parking space is the target parking space of the vehicle, first parking information is determined based on the first group of images, where the first parking information indicates a location of the first parking space in the first building; and the first parking information is sent to an electronic device, where the electronic device is associated with the vehicle.

In an example, the target parking space may be actively selected by a user in an automatic parking process. For example, the user selects the first parking space as the target parking space through an automatic parking interface on a mobile phone or a head unit.

In another example, when a moving distance of the vehicle between a third shift and a fourth shift of the gear of the vehicle is less than or equal to a second threshold, and a distance between the vehicle and the first parking space is less than or equal to a third threshold when the fourth shift is performed on the gear, it is determined that the first parking space is the target parking space, where a moment at which the third shift is performed is earlier than a moment at which the fourth shift is performed. For example, the third shift may be the second gear shift in the method 300, and the fourth shift may be the third gear shift in the method 300. For more detailed descriptions of the third shift and the fourth shift, refer to the descriptions in the method 300. Details are not described herein again. For example, the second threshold and the foregoing third distance threshold are a same value, or the first threshold may be another value. The third threshold may be 3 meters, 2 meters, or another value. A distance between the vehicle and a parking space may be a distance between a center point of the vehicle and a center point of the parking space.

In some implementations, the first parking information includes a first image of the first parking space, or the first parking information is determined based on the first image. The first image includes the parking space number of the first parking space. The method further includes: when the first parking space is the target parking space of the vehicle, deleting an image other than the first image from the at least one image of the first parking space. For example, each image in the at least one image of the first parking space may include the parking space number of the first parking space, and the first image may be an image including the parking space number of the first parking space with highest confidence. In an example, integrity of a parking space number in an image is associated with confidence of an identified parking space number. For example, compared with that in an image including a partial parking space number, confidence of a parking space number obtained by identifying an image including a complete parking space number is higher. In another example, a distortion degree of a parking space number in an image is associated with confidence of an identified parking space number. For example, confidence of a parking space number obtained by identifying an image with a lower distortion degree of a parking space number is higher.

In some implementations, sending the first parking information to the electronic device when the first parking space is the target parking space of the vehicle includes: when the vehicle is parked in the first parking space, sending the first parking information to the electronic device; or when the vehicle is not parked in the first parking space, if it is detected that the vehicle is in a stop and non-power-off state, a driver in the vehicle leaves the vehicle, and a vehicle door is closed, sending the first parking information to the electronic device; or sending the first parking information to the electronic device in a process of parking the vehicle in the first parking space.

In some implementations, the moving distance of the vehicle is determined based on at least one of the following: longitude and latitude differences of the vehicle between the two gear shifts, or duration and a wheel speed of the vehicle between the two gear shifts.

In an example, the moving distance of the vehicle may be determined with reference to the longitude and the latitude difference between the two gear shifts and the duration and the wheel speed between the two gear shifts. For example, the vehicle performs an excessive quantity of gear changes when being parked in the first parking space, and consequently a distance determined based on a wheel speed and duration between two gear shifts is excessively long. In this case, if whether the first parking space is the target parking space is determined through the distance determined based on the wheel speed and the duration, a determining error may be caused. It may be understood that, when the vehicle performs the excessive quantity of gear changes when being parked in the first parking space, longitude and latitude of a location of the vehicle change slightly. Therefore, determining, with reference to the longitude and the latitude difference and a distance determined based on the wheel speed helps improve accuracy of the determined moving distance of the vehicle.

In some implementations, first sensor information is obtained, where the first sensor information is information collected by a second sensor between a first moment and a second moment, the first moment is a moment at which the vehicle enters the first building, the second moment is a moment at which the vehicle travels to a second area in the first building, and the second sensor is a non-satellite positioning sensor; and longitude and latitude and/or a height of the second area are/is determined based on the first sensor information.

For example, when it is detected, through a visual sensor (for example, an image shooting apparatus), that the vehicle travels into the parking area through an automatic gate, it is determined that the vehicle enters the first building; or when strength of a satellite positioning signal is less than or equal to a signal strength threshold (for example, the foregoing second strength threshold), it is determined that the vehicle enters the first building. For a more specific method for determining the moment at which the vehicle enters the first building, refer to the descriptions in the method 400. Details are not described herein again.

In some implementations, the method further includes: sending location information to a cloud server, where the location information includes the longitude and the latitude and/or the height of the second area, and first parking space information. For example, the cloud server may construct map information of the first building based on location information obtained from a plurality of vehicles. For a more detailed implementation, refer to the descriptions of establishing the model diagram of the second building by the cloud server in the method 400. Details are not described herein again.

In some implementations, the second area includes a fourth parking space. The method further includes: determining information about the fourth parking space based on parking space association information and the longitude and the latitude and/or the height of the second area, where the information about the fourth parking space indicates at least one of the following: a parking space number of the fourth parking space or a location of the fourth parking space in the first building, the parking space association information indicates an association relationship between longitude and latitude and/or a height of a parking space and at least one of the following: a parking space number of the parking space or a location of the parking space in the first building.

In an example, the parking space association relationship information may be constructed by the vehicle. For example, the vehicle establishes, based on the longitude and the latitude and/or the height of the parking space sensed in an obtained image of the parking space, an association relationship between an area in which the parking space is located and/or the parking space number of the parking space and the longitude and the latitude and/or the height of the parking space. For a specific implementation in which the vehicle determines the parking space association relationship information, refer to the descriptions of constructing the local database for the second building by the vehicle in the method 400. Details are not described herein again. In another example, the parking space association relationship information may be obtained by the vehicle from the cloud server. For a specific implementation of determining the parking space association relationship information by the cloud server, refer to the descriptions of establishing the model diagram of the second building by the cloud server in the method 400. Details are not described herein again.

According to the method for determining a parking area provided in this embodiment of this application, when the first parking space is not the target parking space, deleting the image including the first parking space helps reduce memory overheads required by the vehicle to determine the parking area. In addition, when the image including the first parking space is deleted, the image of the first area is not deleted, so that the vehicle selects an image with highest confidence from a plurality of images of the first area, then determines the first area based on the image with the highest confidence, and sends the image with the highest confidence or information about the determined first area to the electronic device associated with the vehicle. This helps the user search for the vehicle, and can increase a vehicle search success rate.

It should be noted that the method shown in FIG. 13 may be performed by the apparatus shown in FIG. 10. The obtaining unit 2010 in the apparatus 2000 may be configured to implement a corresponding data obtaining or receiving/sending function in the method 1300. The processing unit 2020 in the apparatus 2000 may be configured to implement a corresponding processing function in the method 1300. Execution is more specifically described in detail in the foregoing method embodiment. For brevity, details are not described herein again. The method shown in FIG. 13 may alternatively be performed by the apparatus 2100 shown in FIG. 11. For a more detailed implementation, refer to the descriptions of corresponding parts in FIG. 10 and FIG. 11. Details are not described herein again.

An embodiment of this application further provides a computing platform. The computing platform includes the apparatus 2000 or the apparatus 2100 in the foregoing embodiment.

An embodiment of this application further provides a vehicle. The vehicle includes the computing platform in the foregoing embodiment, or the vehicle includes the apparatus 2000 or the apparatus 2100 in the foregoing embodiment.

An embodiment of this application further provides a computer program product. The computer program product includes computer program code. When the computer program code is run on a computer, the computer is enabled to implement the methods in the foregoing embodiments of this application.

An embodiment of this application further provides a computer-readable storage medium. The computer-readable medium stores computer instructions. When the computer instructions are run on a computer, the computer is enabled to implement the methods in the foregoing embodiments of this application.

An embodiment of this application further provides a chip, including a circuit, configured to perform the methods in the foregoing embodiments of this application.

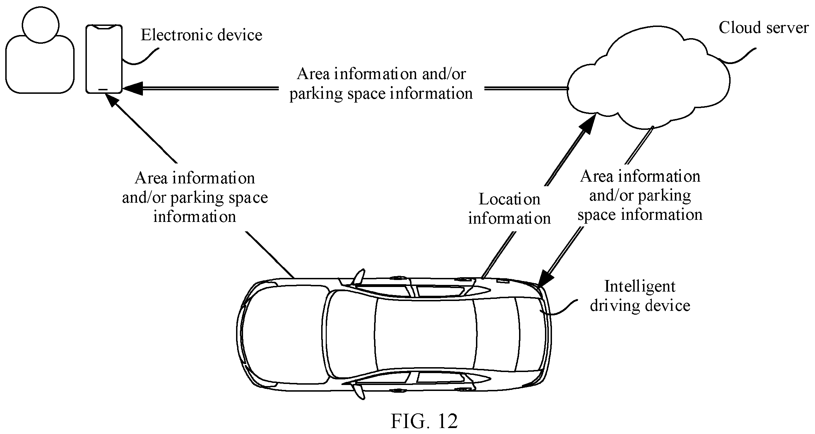

An embodiment of this application further provides a system. As shown in FIG. 12, the system includes an intelligent driving device, a cloud server, and an electronic device. The intelligent driving device may send area information and/or parking space information to the electronic device. The area information and/or the parking space information may be determined through the method in the foregoing embodiment. When the intelligent driving device cannot determine the area information and/or the parking space information, the intelligent driving device may send location information of a parking space of a vehicle to the cloud server. The cloud server determines the area information and/or the parking space information of the parking space of the vehicle based on the location information, and sends the area information and/or the parking space information to the electronic device and/or the intelligent driving device. The location information may be determined through the method in the foregoing embodiment.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In descriptions of embodiments of this application, "/" means "or" unless otherwise specified. For example, A/B may indicate A or B. In this specification, "and/or" describes an association relationship between associated objects and indicates that three relationships may exist. For example, A and/or B may indicate the following three cases: Only A exists, both A and B exist, and only B exists. In this application, "at least one" means one or more, and "a plurality of" means two or more. "At least one of the following items (pieces)" or a similar expression thereof means any combination of these items, including a single item (piece) or any combination of a plurality of items (pieces). For example, at least one of a, b, or c may indicate a, b, c, a and b, a and c, b and c, or a, b, and c, where a, b, and c may be singular or plural.

In embodiments of this application, prefix words such as "first" and "second" are used only to distinguish between different described objects, and do not limit locations, a sequence, priorities, quantities, content, or the like of the described objects. In embodiments of this application, use of the prefix words used to distinguish between the described objects, for example, ordinal numbers, constitutes no limitation on the described objects. For descriptions of the described object, refer to context descriptions in claims or embodiments. Use of the prefix words should constitute no redundant limitation.

In the several embodiments provided in this application, it should be understood that the disclosed system, apparatuses, and methods may be implemented in other manners. For example, the described apparatus embodiments are merely examples. For example, division into the units is merely logical function division, and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

In embodiments of this application, unless otherwise stated or there is a logic conflict, terms and/or descriptions in embodiments are consistent and may be mutually referenced, and technical features in different embodiments may be combined based on an internal logical relationship thereof, to form a new embodiment.

The units described as separate parts may or may not be physically separate, and parts displayed as units may or may not be physical units, to be specific, may be located at one location, or may be distributed on a plurality of network units. A part or all of the units may be selected based on an actual requirement, to achieve the objectives of the solutions of embodiments.

In addition, functional units in embodiments of this application may be integrated into one processing unit, or each of the units may exist alone physically, or two or more units may be integrated into one unit.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for determining a parking area, comprising:
obtaining a first group of images, wherein the first group of images comprises at least one image of a first parking space and at least one image of a first area in which the first parking space is located in a first building; and
deleting the at least one image of the first parking space when the first parking space is not a target parking space of a vehicle.

2. The method according to claim 1, wherein the method further comprises:
when the first parking space is the target parking space of the vehicle, determining first parking information based on the first group of images, wherein the first parking information indicates a location of the first parking space in the first building; and
sending the first parking information to an electronic device, wherein the electronic device is associated with the vehicle.

3. The method according to claim 2, wherein the first parking information comprises a first image of the first parking space, or the first parking information is determined based on the first image, the first image comprises a parking space number of the first parking space, and the method further comprises:
when the first parking space is the target parking space of the vehicle, deleting an image other than the first image from the at least one image of the first parking space.

4. The method according to claim 2 or 3, wherein sending the first parking information to the electronic device when the first parking space is the target parking space of the vehicle comprises:
when the vehicle is parked in the first parking space, sending the first parking information to the electronic device; or
when the vehicle is not parked in the first parking space, if it is detected that the vehicle is in a stop and non-power-off state, a driver in the vehicle leaves the vehicle, and a vehicle door is closed, sending the first parking information to the electronic device; or
sending the first parking information to the electronic device in a process of parking the vehicle in the first parking space.

5. The method according to any one of claims 1 to 4, wherein the method further comprises:
when a moving distance of the vehicle between a first shift and a second shift of a gear of the vehicle is greater than or equal to a first threshold, determining that the first parking space is not the target parking space, wherein
a moment at which the first shift is performed is earlier than a moment at which the second shift is performed.

6. The method according to any one of claims 1 to 5, wherein the method further comprises:
when a moving distance of the vehicle between a third shift and a fourth shift of the gear of the vehicle is less than or equal to a second threshold, and a distance between the vehicle and the first parking space is less than or equal to a third threshold when the fourth shift is performed on the gear, determining that the first parking space is the target parking space, wherein
a moment at which the third shift is performed is earlier than a moment at which the fourth shift is performed.

7. The method according to claim 5 or 6, wherein the moving distance of the vehicle is determined based on at least one of the following: longitude and latitude differences of the vehicle between the two gear shifts, or duration and a wheel speed of the vehicle between the two gear shifts.

8. The method according to any one of claims 1 to 7, wherein the method further comprises:
obtaining first sensor information, wherein the first sensor information is information collected by a second sensor between a first moment and a second moment, the first moment is a moment at which the vehicle enters the first building, the second moment is a moment at which the vehicle travels to a second area in the first building, and the second sensor is a non-satellite positioning sensor; and
determining longitude and latitude and/or a height of the second area based on the first sensor information.

9. The method according to claim 8, wherein the second area comprises the first parking space, and the method further comprises:
sending location information to a cloud server, wherein the location information comprises the longitude and the latitude and/or the height of the second area, and the first parking space information.

10. The method according to claim 8 or 9, wherein the second area comprises a fourth parking space, and the method further comprises:
determining information about the fourth parking space based on parking space association information and the longitude and the latitude and/or the height of the second area, wherein the information about the fourth parking space indicates at least one of the following: a parking space number of the fourth parking space or a location of the fourth parking space in the first building, wherein
the parking space association information indicates an association relationship between longitude and latitude and/or a height of a parking space and at least one of the following: a parking space number of the parking space or a location of the parking space in the first building.

11. The method according to any one of claims 1 to 10, wherein obtaining the first group of images comprises:
obtaining, based on at least one of a speed of the vehicle, a traveling distance of the vehicle, or a similarity between two adjacent frames of images in a video stream captured by a first image shooting apparatus of the vehicle, the first group of images from the video stream.

12. The method according to claim 11, wherein obtaining the first group of images from the video stream comprises:
when the vehicle travels at a first speed, obtaining the first group of images from the video stream at a first frame extraction frequency; and
when the vehicle travels at a second speed, obtaining the first group of images from the video stream at a second frame extraction frequency, wherein
the first speed is greater than the second speed, and the first frame extraction frequency is greater than the second frame extraction frequency.

13. The method according to claim 11, wherein obtaining the first group of images from the video stream comprises:
when a similarity between a former frame of image and a latter frame of image in two adjacent frames of images in the video stream is less than or equal to a similarity threshold, extracting the latter frame of image as an image in the first group of images.

14. The method according to any one of claims 1 to 13, wherein the method further comprises:
when a signal of a first sensor of the vehicle is shielded, controlling a second image shooting apparatus of the vehicle to capture a video stream, wherein the video stream captured by the second image shooting apparatus is used to determine the first area, and the first sensor is a satellite positioning sensor.

15. An apparatus for determining a parking area, comprising:
an obtaining unit, configured to obtain a first group of images, wherein the first group of images comprises at least one image of a first parking space and at least one image of a first area in which the first parking space is located in a first building; and
a processing unit, configured to delete the at least one image of the first parking space when the first parking space is not a target parking space of a vehicle.

16. The apparatus according to claim 15, wherein the apparatus further comprises a first sending unit, and the processing unit is further configured to:
when the first parking space is the target parking space of the vehicle, determine first parking information based on the first group of images, wherein the first parking information indicates a location of the first parking space in the first building; and
the first sending unit is configured to send the first parking information to an electronic device, wherein the electronic device is associated with the vehicle.

17. The apparatus according to claim 16, wherein the first parking information comprises a first image of the first parking space, or the first parking information is determined based on the first image, the first image comprises a parking space number of the first parking space, and the processing unit is further configured to:
when the first parking space is the target parking space of the vehicle, delete an image other than the first image from the at least one image of the first parking space.

18. The apparatus according to claim 16 or 17, wherein the first sending unit is configured to:
when the vehicle is parked in the first parking space, send the first parking information to the electronic device; or
when the vehicle is not parked in the first parking space, if it is detected that the vehicle is in a stop and non-power-off state, a driver in the vehicle leaves the vehicle, and a vehicle door is closed, send the first parking information to the electronic device; or
send the first parking information to the electronic device in a process of parking the vehicle in the first parking space.

19. The apparatus according to any one of claims 15 to 18, wherein the processing unit is further configured to:
when a moving distance of the vehicle between a first shift and a second shift of a gear of the vehicle is greater than or equal to a first threshold, determine that the first parking space is not the target parking space, wherein
a moment at which the first shift is performed is earlier than a moment at which the second shift is performed.

20. The apparatus according to any one of claims 15 to 19, wherein the processing unit is further configured to:
when a moving distance of the vehicle between a third shift and a fourth shift of the gear of the vehicle is less than or equal to a second threshold, and a distance between the vehicle and the first parking space is less than or equal to a third threshold when the fourth shift is performed on the gear, determine that the first parking space is the target parking space, wherein
a moment at which the third shift is performed is earlier than a moment at which the fourth shift is performed.

21. The apparatus according to claim 19 or 20, wherein the moving distance of the vehicle is determined based on at least one of the following: longitude and latitude differences of the vehicle between the two gear shifts, or duration and a wheel speed of the vehicle between the two gear shifts.

22. The apparatus according to any one of claims 15 to 21, wherein the obtaining unit is further configured to:
obtain first sensor information, wherein the first sensor information is information collected by a second sensor between a first moment and a second moment, the first moment is a moment at which the vehicle enters the first building, the second moment is a moment at which the vehicle travels to a second area in the first building, and the second sensor is a non-satellite positioning sensor; and
the processing unit is further configured to determine longitude and latitude and/or a height of the second area based on the first sensor information.

23. The apparatus according to claim 22, wherein the second area comprises the first parking space, and the apparatus further comprises a second sending unit, configured to:
send location information to a cloud server, wherein the location information comprises the longitude and the latitude and/or the height of the second area, and the first parking space information.

24. The apparatus according to claim 22 or 23, wherein the second area comprises a fourth parking space, and the processing unit is further configured to:
determine information about the fourth parking space based on parking space association information and the longitude and the latitude and/or the height of the second area, wherein the information about the fourth parking space indicates at least one of the following: a parking space number of the fourth parking space or a location of the fourth parking space in the first building, wherein
the parking space association information indicates an association relationship between longitude and latitude and/or a height of a parking space and at least one of the following: a parking space number of the parking space or a location of the parking space in the first building.

25. The apparatus according to any one of claims 15 to 24, wherein the obtaining unit is configured to:
obtain, based on at least one of a speed of the vehicle, a traveling distance of the vehicle, or a similarity between two adjacent frames of images in a video stream captured by a first image shooting apparatus of the vehicle, the first group of images from the video stream.

26. The apparatus according to claim 25, wherein the obtaining unit is configured to:
when the vehicle travels at a first speed, obtain the first group of images from the video stream at a first frame extraction frequency; and
when the vehicle travels at a second speed, obtain the first group of images from the video stream at a second frame extraction frequency, wherein
the first speed is greater than the second speed, and the first frame extraction frequency is greater than the second frame extraction frequency.

27. The apparatus according to claim 25, wherein the obtaining unit is configured to:
when a similarity between a former frame of image and a latter frame of image in two adjacent frames of images in the video stream is less than or equal to a similarity threshold, extract the latter frame of image as an image in the first group of images.

28. The apparatus according to any one of claims 15 to 27, wherein the processing unit is configured to:
when a signal of a first sensor of the vehicle is shielded, control a second image shooting apparatus of the vehicle to capture a video stream, wherein the video stream captured by the second image shooting apparatus is used to determine the first area, and the first sensor is a satellite positioning sensor.

29. An apparatus for determining a parking area, comprising:
a processor, configured to execute a computer program stored in a memory, to enable the apparatus to perform the method according to any one of claims 1 to 14.

30. The apparatus according to claim 29, wherein the apparatus further comprises the memory.

31. A vehicle, comprising the apparatus according to any one of claims 15 to 30.

32. A computer-readable storage medium, wherein the computer-readable storage medium stores instructions, and when the instructions are executed by a processor, the method according to any one of claims 1 to 14 is implemented.

33. A computer program product, wherein the computer program product comprises computer program code, and when the computer program code is run by a processor, the method according to any one of claims 1 to 14 is implemented.

34. A chip, wherein the chip comprises a circuit, and the circuit is configured to perform the method according to any one of claims 1 to 14.
